# EUROPEAN PATENT APPLICATION

(11) **EP 2 647 305 A1**
(43) Date of publication of application: **09.10.2013**
(21) Application number: 11844016.3
(22) Date of filing: 19.09.2011
(51) Int. Cl.: A43D 1/02, G06T 15/40

(54) **METHOD FOR VIRTUALLY TRYING ON FOOTWEAR**

(30) Priority: 03.12.2010 ES 201031803 P
(71) Applicant: Alu Group, S.L., 03203 Elche (Alicante) (ES)
(72) Inventor: HERNÁNDEZ STARK, Rafael, E-03203 ELCHE (Alicante) (ES); MARTÍNEZ IBÁÑEZ, Pascual, E-03203 ELCHE (Alicante) (ES); MONTIEL PARREÑO, Enrique, E-03203 ELCHE (Alicante) (ES); SABATELL HERRERO, Iván, E-03203 ELCHE (Alicante) (ES)
(74) Representative: Ungria López, Javier
(86) International application number: PCT/ES2011/070649
(87) International publication number: WO 2012/072844

(57) **Abstract**

According to the invention, a 3D image of a virtual model of footwear (2) is obtained, said image including a high number of polygons, from which an image is obtained by means of a rendering engine. The method is characterised in that it comprises steps consisting in: reducing the number of polygons in the image at least to the maximum number of polygons that can be processed by the rendering, positioning an augmented reality marker (4) and the user's foot together in the visual field of the camera in order to capture an image of the foot, and representing the virtual footwear on the position of the foot, thereby obtaining an image of the footwear with the foot inside so that the user can see how the footwear (2) looks on the foot.

## Description

### OBJECT OF THE INVENTION

The present invention, as expressed in the wording of this specification, relates to a method for virtually trying on footwear, allowing a user to see how footwear looks on their foot, and the aesthetic effect that it produces, so that the method of the invention provides the visualization of a real image of the user's foot, taken by an image capturing camera, over whose foot, the image of a virtual shoe with a size, position and orientation coinciding with the user's foot is superimposed, by means of augmented reality (AR) technique. The invention includes both the possibility of trying on the footwear in person, such as in a shop, as well as in a telematics way, for example, from an individual's home.

The method of the invention is based on a 3D display image of a virtual model of the footwear and adapts it to the idiosyncrasies characteristic of the type of augmented reality representation.

### BACKGROUND OF THE INVENTION

When purchasing footwear, both aesthetic criteria and functional criteria are involved in the selection thereof. The invention focuses on providing a solution to the problems that affect the aesthetic criteria of the selection.

Normally a user is not satisfied with seeing a photograph of the model of footwear to know if it is to their taste or not, thus they demand to try on the shoe to see if it is the correct fit and to know how it feels once they have put it on, to see if it matches their clothes or if it suits their style and/or their personal image. It so happens that it is not always possible to try on footwear, either because the footwear cannot be physically found in the footwear retail establishment, or because a purchase is being made by catalogue or over the Internet, or because the user cannot be served at that moment in the shoe shop, or because the user wishes to try on a virtual collection or even because it is a custom model of a shoe that has not been manufactured and only exists as a virtual model.

In the state of the art, there are different patented procedures and systems that claim to be useful for seeing how a virtual garment fits on a user. In this sense, the patent document ES-P200502801 and PCT/ES06/000623 can be cited, which describe a method for generating and using a virtual clothing garment fitting, which, by computer means connected to a camera and some visualization means, obtain images of a garment, from which a representation of a flat surface which is geometrically superimposed on the outline of the user is generated, adapting to said flat surface with respect to the outline of the user through mathematical simulations of the garment, so that it then shows the user wearing said garment by superimposing the image of the garment obtained on the user's image.

The patent document ES2325374 T3 can also be cited, which relates to an augmented reality system with real marker object identification that inspects a real world surrounding to generate image data thereof, present data of a virtual image and superimpose the data of the virtual image with data of additional objects so that it "augments" the surrounding to the real world, allowing to integrate a virtual element in a real image, controlling parameters taken from the environment, mainly light and shadow.

Patent document P200602922 can also be cited, which describes an interactive visualization system based on augmented reality technologies for leisure and tourism uses, allowing a user to view an augmented real image with some information of interest.

Another document of the state of the art is the patent P200602314, which describes a system that allows the visualization of virtual furniture modelled in three dimensions and positioned firstly in a catalogue, and secondly in a room or real surrounding, allowing the user the ability to see how their home will be furnished.

The patent document WO20010024486 can also be cited, which describes a hair styling simulation system and a method using augmented reality.

Document KR20080022983 (A) describes a system and a method which represents a virtual map on which an object is placed.

None of the above documents describe a method that allows a user to try on footwear in a way that shows the footwear superimposed on the user's foot, linked to the position thereof, and with an orientation and correct relative size, including the opening or hollow of the footwear to show how the footwear would look on the user, as if the foot were placed inside, and allow the user to move their foot and see it in different positions.

To summarise, there is no known method that uses augmented reality

(AR) to enable a user to see how a shoe looks on them.

### DESCRIPTION OF THE INVENTION

To achieve the objectives and solve the above drawbacks, the invention has developed a new method that enables the virtual trying on of footwear, which comprises obtaining in a conventional computer, a three-dimensional (3D) display image of a virtual model of an item of footwear, so that said image includes a plurality of polygons from which a 2D or 3D image is obtained using a rendering engine in real time.

It should be noted that the term rendering is a term used in computer jargon by animators, audio-visual producers and in 3D design programs, and refers to the process of generating an image from a 3D model.

The invention is characterized in that it comprises removing the polygons from the three-dimensional display image of the virtual model of the footwear relating to its interior parts that are hidden in all its spatial views when a foot is housed inside it, and then verifies that the number polygons that have not been removed from the virtual model is a number lower than what the rendering engine can process, so that when no previous verification has been produced, i.e. when the number of polygons remaining that have not been removed is greater than the maximum number of polygons that the rendering engine can process, it proceeds to perform a phase in which the number of polygons performed is at least the maximum number of polygons that the rendering engine can process. Furthermore the method of the invention comprises obtaining a first marker capable of being identified by a spatial positioning algorithm (augmented reality), and loading the image of the footwear obtained on a spatial positioning software application using augmented reality (AR), which stores a master copy of the first augmented reality marker and the identification algorithm of the first marker and which, furthermore, is connected to an image capturing camera. Subsequently, the first augmented reality marker is placed together with the user's foot in the visual field of the camera, to capture an image of said foot together with said first augmented reality marker, and the first augmented reality marker is analysed, which is identified as an origin of coordinates of three axes. Subsequently, the position and orientation of the image of the user's foot is analysed and its position in respect of the origin of coordinates is established to then place, using the spatial positioning software application, the image of the footwear loaded on said spatial positioning software application, in the position that the foot occupies in respect of the origin of coordinates, which then enables to represent the image of the virtual footwear using the rendering engine on the position of the foot, superimposing said image of the footwear on the image of the foot captured by the camera, obtaining an image of the footwear and foot equivalent to a real image of the footwear with the foot inside.

According to the description made, the method described enables the image of the user's foot to be taken with a bare foot, with a sock, with an overshoe or even footwear.

Using the procedure described, the invention successfully solves the aforementioned problems, enabling the user to see if the footwear suits them and how the footwear looks when tried on, by superimposing on the real image of their foot, taken using an image capturing camera, and making the virtual representation of the footwear, properly oriented, positioned and installed so that the user visualizes it as if wearing it.

Furthermore, the procedure of the invention comprises performing a relative movement of the first augmented reality marker in respect of the plane of the captured image, either by performing a movement of the camera, or by a movement of the foot which moves together with the first augmented reality marker, which, based on the procedure described above, represents the virtual footwear image using the rendering engine on the new position of the foot, superimposing said image of the footwear on the image of the foot captured by the camera, in a way that the procedure of the invention is capable of changing the representation of the image of the footwear with the foot placed inside it, consistent with the movements have been performed, thereby allowing the visualization of the footwear in which the user's foot is placed, from different positions and angles.

In one embodiment of the invention, the obtaining of a first augmented reality marker comprises printing a first augmented reality marker using a computer, on a paper which is located on the ground, and then putting the user's foot next to the first augmented reality marker. Also on the paper, a second augmented reality marker can be added, to indicate the location in which the user must position their foot, in which case said second augmented reality marker is also found stored in the spatial positioning software application, in a way that it knows in advance the position of the foot in respect of the origin of coordinates.

In another embodiment of the invention, obtaining a first augmented reality marker is done on a sock or an overshoe that the user puts on.

In another embodiment of the invention, obtaining a first augmented reality marker is performed on a rotating platform, which may include means for retaining the user's foot to establish the position of the user's foot, relative to the first augmented reality marker, in a way that the spatial positioning software application software previously knows the position of the foot in respect of the axis of coordinates.

In another embodiment of the invention, it is envisioned that obtaining a first augmented reality marker is performed on a fixed area of a floor on which the camera is focused, so that in this case, for example, a user who passes in front of a shop, placing their foot on the spot which has the first marker, is able to directly visualize how an item of footwear fits.

Furthermore, the invention envisions that the first augmented reality marker can be obtained by means of a projection.

With respect to the phase in which the removal of polygons takes place, one embodiment of the invention comprises reducing the resolution of the three-dimensional display image, merging adjacent polygons and obtaining a new polygon which is the sum of at least two adjacent polygons.

Furthermore, the invention also envisions that the removal of polygons consists of reversing the polygon normals which form the surfaces of the internal parts, so that they face in the opposite direction to that of the image capturing camera and are invisible to the rendering engine.

Furthermore, the method of the invention envisions that the removal of polygons comprises substituting the painted textured material of the polygons that form the surfaces of the internal parts, for a transparent one which makes said surface invisible to the image capturing camera.

In another embodiment of the invention, the removal of polygons comprises superimposing new elements to produce the emptying of the surfaces of the internal parts of the footwear.

In addition to the removal of polygons, it comprises the sectioning of the virtual footwear and selecting at least one portion obtained as a result of said sectioning, to then modify its combination of colours, materials or shapes. This characteristic also enables the user to select a change in certain parts of the footwear through the identification of the surface that simulate the parts that compose said footwear, allowing for different combinations of colours, shapes, accessories, etc. on the selected footwear.

This enables the user to experience individual designs on each item of footwear, enabling them to change these sections and textures individually, generating footwear that is unique in design.

Obviously the invention envisions the possibility that any of the forms used to carry out the removal of polygons, can be employed in the method of the invention, or any combination thereof.

The loading of the image of the footwear obtained from a spatial positioning software application using augmented reality can be performed by a remote process, for example via the Internet so that the polygon removal phase is performed on a remote computer. Furthermore, the invention envisions the possibility that said loading phase of the image of the footwear obtained from a spatial positioning software application is performed locally, in which case the removal of polygons is performed on a local computer.

Thus the loading of the image can be performed by wiring by means of a device belonging to the user, such as an iPhone, or belonging to the store by remote. It can also be done via wireless means and using touch devices.

With respect to the image capturing camera, the invention envisions that the camera can be constituted by a video camera, a web camera or a photograph camera, so that in any of the cases, using the method of the invention, an image of the footwear with the foot inserted therein is obtained. Obviously any device that allows capturing still or moving images can also be used such as a "Time of Flight" camera.

Finally noting that the method of the invention may comprise a third augmented reality mark, stored in the spatial positioning application, to identify and cause a trigger response, by actuation of a key and perform an action previously established in the spatial or functional positioning application, such as the increase in size, change of model of footwear, etc.

It is easily understood that additionally, the method of the invention can be applied so that a user can try on a hat, bags or similar items, changing only the shoe for one of those elements.

The following, in order to provide a better understanding of this specification and forming an integral part thereof, is a set of figures wherein by illustrative and non-limitative example, illustrations have been represented, which enable an understanding of the procedure of the invention.

### BRIEF DESCRIPTION OF THE FIGURES

**Figure 1****.-** Shows a perspective view of the result of the representation of the image of virtual footwear superimposed on the user's foot by means of a conventional method, which clearly shows how the image does not give the impression that the foot is inserted in the footwear.
**Figure 2****.-** Shows a perspective view of a representation of the image of virtual footwear on the user's foot according to the method of the invention, in which the representation obtained represents the footwear which simulates the foot inserted therein.
**Figure 3****.-** Shows another example of the invention equivalent to the previous figure, but with a different model of footwear and in a different position since the method of the invention allows to rotate the image of the foot, the footwear is represented as if said foot were inserted inside the footwear.

### DESCRIPTION OF THE PREFERRED EMBODIMENT OF THE INVENTION

The following is a description of the invention based on the figures mentioned above.

The procedure of the invention is based on obtaining, on a computer, a three-dimensional (3D) display image of a virtual model of footwear that a user wishes to try on. Said virtual model comes from a descriptive geometric file based on polygons, in NURBS (Non Uniform Rational B-Spline Lines) curves or any other system of geometrical description, and from either a three-dimensional scanning of the actual model or from the design of said shoe using a CAD (Computer Aided Design) application, or any other system for generating 3D models.

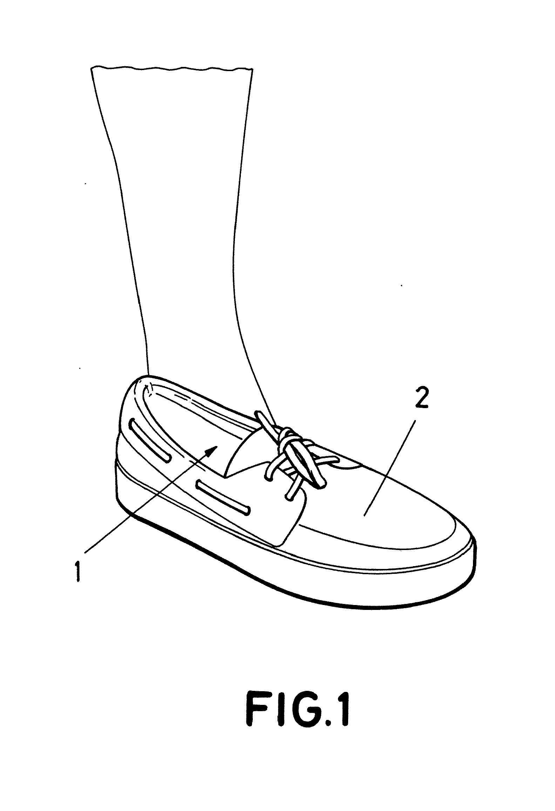

The result is a virtual model with a large number of polygons that needs to be optimized towards its virtual representation by a rendering engine in real time, connected to a spatial positioning application by means of AR, with the use of markers (glyphs) i.e. including augmented reality markers to superimpose the virtual model to an image obtained. An example of this is shown in Figure 1, wherein the virtual model is footwear which is superimposed on the user's foot, so that the representation obtained does not represent the footwear as if the foot were inserted therein.

To overcome this drawback, and to enable the user to visualize an image that represents the impression that their foot is placed inside the footwear, the method of the invention comprises the following phases:
- Removing the surfaces of the hidden objects (midsole, high cap of the heel, etc.), erasing their polygons; they are objects that will not be visualized, therefore they are not necessary. Checking the number of polygons to see if it exceeds the number supported by the rendering engine that will be used. If the number is equal to or less than the number of polygons supported, it is not necessary to continue.
- Decimating polygons which do not constitute part of the physical edges of the virtual model (marked by abrupt angle changes, or by changes of material) decreasing the resolution (number of polygons per unit of area) used for the geometric description of the footwear. For this, adjacent polygons are merged (three or four vertices), constituting a new polygon sum of 2 or more of said adjacent polygons and respecting their outer borders (edges) bordering with other polygons. This process is recursive, and should continue until the number of polygons of the model is equal to or less than the number supported by the rendering engine that will be used. The lower the resolution the model has, the worse the visualization that will be obtained, therefore the process must be stopped as soon as a number of polygons that can be supported by the rendering engine without problems is obtained.

Upon the necessary removal of polygons, to reduce the total size of polygons describing each virtual shoe, another necessity arising from the virtual representation of the shoe must be added to it. In order to provide a representation of authenticity it is not enough to simply superimpose the virtual representation of the shoe onto the real image of the user's foot, because with certain camera angles and in certain positions of the shoe, interior surfaces are shown and it would be necessary or either hide or delete them. For this, the following method proposed can be resorted to:
- Removing the internal surfaces 1 of the footwear 2 (inner lining and sole), erasing their polygons: they are useful for manufacturing, but not for visualization. Additionally it helps to reduce the total number of polygons in the virtual model.
   This process is done so that the user who tries on the virtual footwear **2** has the immersive impression that their foot is inside said footwear **2.** The following explains the importance of emptying polygons/texture of the internal faces. Removal of internal faces is the removal of surfaces which are not intended to be rendered; it is performed in the 3D editor prior to publication on the computer application. The method is based on the selection of geometry that forms that interior face and the removal thereof.
   Consequently, by means of the method of the invention, the engine is prompted to render the object in 3D, and not apply any rendering to the internal faces, that is, only the exterior portion of the shoe is subject to rendering.

Subsequently, the image of the footwear obtained on a spatial positioning software application is loaded using augmented reality that stores a master copy of a first marker **4,** capable of being identified by an augmented reality spatial positioning algorithm (augmented reality) and an algorithm for the identification of the first marker **4,** and furthermore, is connected to an image capturing camera. The first augmented reality marker **4** has been previously established by the method of the invention.

In the embodiment example, the first augmented reality marker **4** is printed on a sheet **3** which is placed on the ground, so that the user places their foot near the first marker **4,** within the visual field of the camera, to capture the image of the foot next to the first marker **4.**

Subsequently, the first marker **4** is analysed and is identified as an origin of coordinates of three axes, and the image of the user's foot is analysed to establish its position in respect of the origin of coordinates, so that later, the application of spatial positioning places the image of the footwear loaded in the position that the foot occupies in respect of the origin of coordinates.

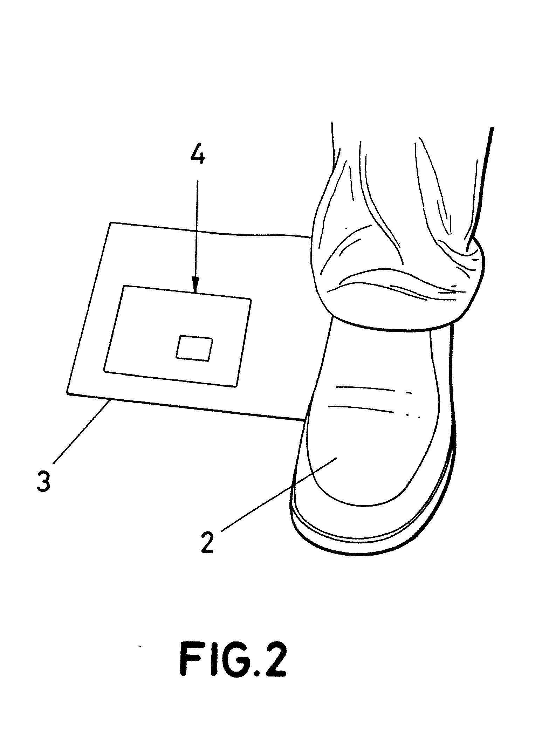

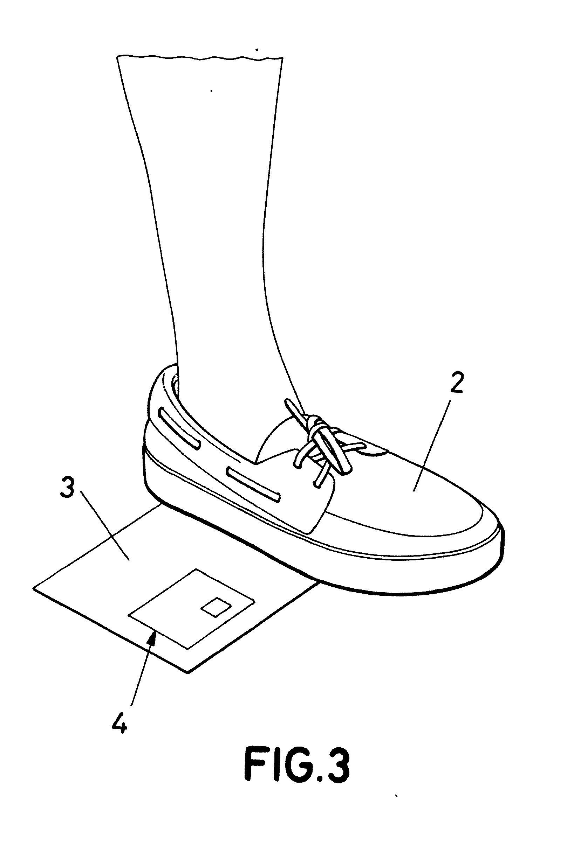

In the embodiment example of Figures 2 and 3, the first marker **4** is determined by an area in a defined manner, in such a way that analysis of the edge of the area allows for the relative position and orientation of the paper **3** with respect to the plane of the camera, thus the first marker **4** being identified as the indicated origin of coordinates.

The geometric pattern of the first marker **4** is recognised by the application, as a result of performing a binary check of the first marker **4** with the master copy of the first marker stored in the application, so that one or more markers on the same image can be identified and differentiated, with the ability of adding a second marker (not shown) as a reference to locate the user's foot, in the position and orientation on the three axes on the image captured by the camera, and which furthermore, serves to allow interaction with said application, adding a third marker (not shown) allowing to obtain a trigger response of an action in the application previously established, analogous to that of pressing a key or a mouse button, for example, to select a new model of footwear.

From the information the application must represent the virtual footwear **2,** using the rendering engine, placing it accurately and with reference to the first marker **4,** superimposing it onto the image captured by the camera, in such a way that a relative movement of the first marker **4** with respect to the image plane, either by moving the camera or by moving the first marker **4,** produces the same displacement, change of orientation and/or change of scale in the virtual objective, thus giving the impression of being realistically connected to the image taken and displayed by the camera.

Using the method of the invention, the image of the user's bare foot, or foot covered by a stocking, sock, overshoe, or a real shoe, can be obtained, so that in any of the cases the foot will be shown with a superimposition of virtual footwear **2** oriented with respect to the first marker **4** positioned close to the foot, so that any movement of the assembly of the foot together with the first marker **4,** is immediately reflected in the image shown by the software application with a movement corresponding to the virtual footwear **2.** In the example of an embodiment of the invention, it is easily achievable upon pressing the foot against the paper 3, and performing the rotation of the foot, which in its movement causes the rotation of the paper **3,** and consequently of the first marker **4.**

The invention envisions the possibility that the first marker **4** is positioned on a sock that is located on the foot, or placing the foot, with or without footwear, on the sheet of paper **3,** integrally attached or not, to the sole of the foot or of the sock or shoe, or even considers the possibility of placing the foot on a mobile platform that contains the first marker **4,** and immobilizes the foot on the same while allowing the mobility of the integral assembly of the foot plus the platform.

The purpose of the first marker **4** is to establish an invariable real physical relationship between the user's foot and the plane of the camera, with the relationship being able to adopt different formats, provided that the premise that the first marker **4** must retain position, orientation and scale with respect to the foot, is maintained, and that it moves in unison with the user's foot or the camera.

## Claims

1. Method for virtually trying on footwear, which comprises obtaining on a conventional computer, a three-dimensional display image of a virtual model of footwear, including a plurality of polygons from which an image is obtained using a rendering engine in real time; **characterised in that** it comprises:
- removing the polygons from the image of the virtual model of the footwear relating to its interior parts that are hidden in all spatial views when a foot is housed in its interior,
- verifying that the number of polygons that have not been removed from the virtual model is a smaller number than what the rendering engine can process,
- reducing the number of polygons, at least the maximum number of polygons that can be processed by the rendering, when there has been no such verification,
- obtaining a first marker capable of being identified by a spatial positioning algorithm of augmented reality,
- loading the image of the footwear obtained on a spatial positioning software application using augmented reality (AR), which stores a master copy of the first augmented reality marker and the identification algorithm of the first marker and which, furthermore, is connected to an image capturing camera,
- placing the first augmented reality marker and the user's foot in the visual field of the camera, to capture an image of said foot together with said marker,
- analysing the first virtual reality marker and identifying it as an origin of threeaxis coordinates,
- analysing the position and orientation of the image of the user's foot and locating it in respect of the origin of coordinates,
- placing, by means of the spatial positioning software application, the image of the footwear loaded in the position of the foot in respect of the origin of coordinates,
- representing the image of the virtual footwear using the rendering engine on the position of the foot, superimposing said image of the footwear on the image of the foot captured by the camera.

2. Method for virtually trying on footwear, according to claim 1, **characterised in that** it comprises performing a movement relative to the first augmented reality marker in respect of the plane of the image, by means of a movement selected from among a movement of the camera and a movement of the foot, together with the first augmented reality marker; and representing the image of the virtual footwear using the rendering engine on the new position of the foot, superimposing said image of the footwear on the image of the foot captured by the camera.

3. Method for virtually trying on footwear, according to claim 2, **characterised in that** the obtaining of a first augmented reality marker comprises printing a first augmented reality marker using a computer, on a paper which is located on the ground, and then placing the user's foot next to the first augmented reality marker in a position indicated on the paper by means of a second augmented reality marker, stored in the spatial positioning software application, in order to establish the position of the foot with respect to the origin of coordinates established by the first augmented reality marker.

4. Method for virtually trying on footwear, according to claim 2, **characterised in that** the obtaining of a first augmented reality marker is performed by means of an element selected from among a sock or an overshoe that the user puts on.

5. Method for virtually trying on footwear, according to claim 2, **characterised in that** the obtaining of a first augmented reality marker is performed on a rotating platform.

6. Method for virtually trying on footwear, according to claim 5, **characterised in that** the rotating platform comprises means of retention of the user's foot.

7. Method for virtually trying on footwear, according to claim 1, **characterised in that** the obtaining of a first augmented reality marker is performed in a fixed area of the floor on which the camera is focusing.

8. Method for virtually trying on footwear, according to claim 1, **characterised in that** the obtaining of a first augmented reality marker is performed by means of a projection.

9. Method for virtually trying on footwear, according to claim 1, **characterised in that** the removal of polygons comprises reducing the resolution merging adjacent polygons and obtaining a new polygon which is the sum of at least two adjacent polygons.

10. Method for virtually trying on footwear, according to claim 1, **characterised in that** the removal of polygons consists of reversing the polygon normals which form the surfaces of the internal parts, so that they face the opposite direction to that of the image capturing camera and are invisible to the rendering engine.

11. Method for virtually trying on footwear, according to claim 1, **characterised in that** the removal of polygons comprises substituting the painted textured material of the polygons that form the surfaces of the internal parts, for a transparent one which makes said surfaces invisible to the image capturing camera.

12. Method for virtually trying on footwear, according to claim 1, **characterised in that** the removal of polygons comprises superimposing new elements to produce the emptying of the surfaces of the internal parts of the footwear.

13. Method for virtually trying on footwear, according to claim 1, **characterised in that** the removal of polygons comprises the sectioning of the virtual footwear and selecting at least one portion obtained as a result of said sectioning and modifying its combination of an element selected from among colours, materials, shapes and combinations thereof.

14. Method for virtually trying on footwear, according to claim 1, **characterised in that** the loading of the virtual model from which the image of the footwear obtained in a spatial positioning application, obtained using augmented reality (AR), is performed by a process selected from among local and remote.

15. Method for virtually trying on footwear, according to claim 1, **characterised in that** the image capturing camera is selected from among a video camera, a webcam and a photograph camera.

16. Method for virtually trying on footwear, according to claim 1 or 2, **characterised in that** it comprises a third marker of augmented reality, for causing, upon identifying said third marker of augmented reality, a trigger response, by actuation of a key and performing an action previously established in the spatial or functional positioning application.
